# EUROPÄISCHE PATENTSCHRIFT

(11) **EP 1 160 133 B1**
(45) Veröffentlichungstag und Bekanntmachung des Hinweises auf die Patenterteilung: **18.01.2006**
(21) Anmeldenummer: 01113125.7
(22) Anmeldetag: 29.05.2001
(51) Int. Cl.: B60R 19/34

(54) **Deformationselement**
Deformable element
Elément déformable

(30) Priorität: 29.05.2000 DE 10026402; 28.05.2001 DE 10126065
(43) Veröffentlichungstag der Anmeldung: 05.12.2001
(73) Patentinhaber: BENTELER AG, D-33104 Paderborn (DE)
(72) Erfinder: Dr. Kröning, Achim, 33102 Paderborn (DE); Dr. Wang, Hui, 33102 Paderborn (DE); Straznikiewiecz, Dariusz, 33102 Paderborn (DE)
(74) Vertreter: Bockermann, Rolf

(56) Entgegenhaltungen:
- DE-A- 19 540 787
- DE-A- 19 635 285
- DE-A- 19 731 342
- US-A- 4 829 979
- US-A- 6 003 934

## Beschreibung

Die Erfindung betrifft ein Deformationselement zwischen einem Längsträger und einem bezüglich seiner horizontalen Mittellängsebene gegenüber der horizontalen Mittellängsebene des Längsträgers vertikal versetzten Querträger eines Kraftfahrzeugs.

Um den Vorschriften für die Einstufung in eine bestimmte Schadensklasse einer Kraftfahrzeugversicherung zu genügen (z.B. gemäß dem low-speedtest bis 16 km/h), erlangt die Ausbildung des vorderen Querträgersystems eines Kraftfahrzeugs und hier speziell der zwischen die Längsträger und den Querträger eingegliederten Deformationselemente eine besondere Bedeutung. Von der Gestaltung der Deformationselemente wird verlangt, dass diese im Umfang des low-speed-tests die hierbei auftretenden Beanspruchungen voll aufnehmen und eine Beschädigung der Fahrzeugstruktur ausgeschlossen wird.

In diesem Zusammenhang liegen optimale Bedingungen zur Umwandlung von Aufprall- in Verformungsenergie vor, wenn ein Deformationselement so ausgebildet und angeordnet ist, dass es gewissermaßen eine Verlängerung eines Längsträgers der Fahrzeugstruktur bildet. Hiermit ist insbesondere gemeint, dass sich die horizontalen Mittellängsebenen des Längsträgers und des Querträgers in demselben Höhenniveau erstrecken.

Diese Idealsituation eines vorderen Querträgersystems eines Kraftfahrzeugs liegt jedoch meistens dann nicht vor, wenn es sich um ein Kraftfahrzeug, insbesondere Personenkraftfahrzeug, handelt, dessen Gewicht 2 t und mehr beträgt. In diesen Fällen sind die horizontalen Mittellängsebenen des Querträgers und der Längsträger zueinander vertikal versetzt, und zwar überwiegend derart, dass die Mittellängsebene des Querträgers höher liegt als die Mittellängsebenen der Längsträger. Werden dann Aufprallkräfte in das Querträgersystem eingeleitet, so ergeben sich durch den vertikalen Versatz der Mittellängsebenen Biegemomente, die sich negativ auf den Verformungsbereich im Frontabschnitt des Kraftfahrzeugs auswirken. Die Folge hiervon ist, dass das Querträgersystem zum Abfangen der Biegemomente verstärkt werden muss, was bislang nur durch vergleichsweise aufwendige komplexe Ausgestaltungen erreicht werden konnte. Mit diesen Gestaltungen sind jedoch nicht nur Gewichtserhöhungen, sondern auch höhere Gestehungskosten verbunden.

In diesem Zusammenhang ist im Umfang der US-PS 5,201,912 ein Deformationselement zwischen einem Längsträger und einem bezüglich seiner horizontalen Mittellängsebene gegenüber der horizontalen Mittellängsebene des Längsträgers vertikal versetzten Querträger eines Kraftfahrzeugs bekannt, das aus Rohrstücken besteht. Die Rohrstücke erstrecken sich quer innerhalb des Querträgers. Bei einem Aufprallunfall sollen sowohl die sich an den Längsträgern abstützenden Deformationselemente als auch der Querträger selber verformen, so dass die Aufprallenergie in Verformungsenergie umgewandelt wird.

Die US-PS 5,785,367 offenbart ein Deformationselement stirnseitig der Längsträger. Dieses Deformationselement besteht jedoch im wesentlichen aus dem Querträger selber, wobei der Querträger von einem länglichen U-förmigen Versteifungsglied durchsetzt wird, das mit dem kastenartigen Querträger vernietet ist.

Die US-PS 6,007,009 befasst sich mit der Querschnittsgestaltung von Querträgern und der Ausbildung gezielter Sollknickstellen, welche bei einem Auffahrunfall ihre Wirkung entfalten sollen.

Schließlich ist es aus der EP 0 546 352 A1 bekannt, dass Schweißverbindungen zu den im Fahrzeugbau klassischen Fügemethoden gehören.

Der Erfindung liegt - ausgehend vom Stand der Technik - die Aufgabe zugrunde, ein Deformationselement zwischen einem Längsträger und einem bezüglich seiner horizontalen Mittellängsebene gegenüber der horizontalen Mittellängsebene des Längsträgers vertikal versetzten Querträger zu schaffen, das bei variabler Anpassung an den jeweiligen Fahrzeugtyp einfach ausgebildet ist, bei geringem Gewicht ein optimales Deformationsverhalten zeigt und mit geringem Aufwand gefertigt werden kann.

Die Lösung dieser Aufgabe besteht nach der Erfindung in den Merkmalen des Patentanspruchs 1.

Zentraler Bauteil eines solchen Deformationselements ist ein im Querschnitt mehreckiger, länglich hohler Basiskörper mit einer größeren Höhe als Breite. Diesem Basiskörper wird nun in Abhängigkeit von dem jeweiligen Fahrzeugtyp mindestens eine im Querschnitt U-förmige Versteifungsschale so gezielt zugeordnet, dass die durch den Versatz der horizontalen Mittellängsebenen von Querträger und Längsträger in der vertikalen Mittellängsebene auftretenden Biegemomente optimal aufgefangen werden. Dazu übergreift die Versteifungsschale mit den Längsrändern ihrer Schenkel den Basiskörper. Der Basiskörper und die Versteifungsschale werden schweißtechnisch verbunden, wobei eine Punktschweißung oder auch kurze Längsnähte zur einwandfreien Verbindung ausreichen. Speziell werden die Längsränder außenseitig der Seitenwände des Basiskörpers verschweißt. Wie weit die Schenkel den Basiskörper übergreifen, wird durch das jeweils verlangte Deformationsverhalten bestimmt. Der Basiskörper und/oder die Versteifungsschale können gezogen sein oder aus Pressteilen gebildet werden. Auch ist es möglich, durch Variation der Blechdicken in Verbindung gegebenenfalls mit dem Material (Stahl- und/oder Aluminiumblech) ein optimales Deformationsverhalten des Deformationselements selbst bei einem sehr ungünstigen Höhen-Breiten-Verhältnis zu erzielen. Hierbei kann insbesondere durch die quer verlaufenden Stege des Basiskörpers und der Versteifungsschale erreicht werden, dass die sich vertikal erstreckenden Schenkel von Basiskörper und Versteifungsschale nicht einfallen können und auch kein zusätzlicher Aufwand durch eine Sickenausbildung betrieben werden muss. Wieviele Versteifungsschalen nun quasi etagenweise dem Basiskörper zugeordnet werden, hängt vom jeweiligen Fahrzeugtyp und dem gewünschten Deformationsverharten ab. Es sind jedenfalls keine zusätzlichen Konsolen oder Versteifungselemente zum Ausgleich des Höhenversatzes zwischen dem Querträger und den Längsträgern erforderlich. Dennoch erlaubt es die Erfindung, selbst große Mengen an Aufprallenergie einwandfrei in Verformungsenergie umzuwandeln, da das Deformationselement sich nicht nur an den Längsträgern, sondern auch gegebenenfalls zusätzlich beispielsweise noch am Fahrschemel abstützen kann. Die Versteifungsschale kann sich exakt parallel zum Basiskörper oder auch schräg zu diesem erstrecken. Des Weiteren ist das Deformationsverhalten durch eine unterschiedliche Höhe der Schenkel der Versteifungsschale beeinflussbar.

Eine vielen Fahrzeugtypen genügende Bauart besteht in den Merkmalen des Patentanspruchs 2. Danach ist der Basiskörper oben und unten von jeweils mindestens einer U-förmigen Versteifungsschale übergriffen. Auf diese Weise werden gewissermaßen drei übereinander liegende Kanäle mit insgesamt vier Querstegen als Versteifungen geschaffen.

Durch die Schrägstellung der dem Querträger zugewandten Stirnseiten des Deformationselements entsprechend den Merkmalen des Patentanspruchs 3 kann eine noch bessere Kraftübertragung vom Querträger in das Deformationselement realisiert werden. Grund ist der Sachverhalt, dass nicht alle Bereiche der Stirnseiten in einem Crashfall gleichzeitig beaufschlagt werden, sondern zunächst nur der dem Querträger benachbarte Eckbereich, bevor die dahinter in Richtung zu einem Längsträger liegenden Bereiche verformt werden. Hierbei ist eine Schrägung der Stirnseiten sowohl in der vertikalen als auch in der horizontalen Ebene denkbar. Ferner ist eine kombinative Anwendung beider Gestaltungen möglich.

Bei einer Ausbildung des Deformationselements aus einem Basiskörper und zwei weiteren Versteifungsschalen werden dann im Crashfall beispielsweise zunächst die obere Versteifungsschale, dann der Basiskörper und zuletzt die untere Versteifungsschale beansprucht und folglich mit wachsendem Widerstand verformt.

Der Basiskörper kann einteilig aus einem gezogenen rechteckigen Hohlprofil gebildet sein. Er kann aber auch entsprechend Patentanspruch 4 durch zwei U-förmige Schalen hergestellt werden, die über die Längsränder ihrer gegeneinander gerichteten Schenkel miteinander schweißtechnisch verbunden sind. Vorteilhaft ist es in diesem Fall, wenn die Längsränder einer Schale um etwa die Blechdicke nach innen eingezogen sind, so dass bis auf den Überlappungsbereich der Längsränder die Außenflächen von Ober- und Unterschale jeweils in einer Vertikalebene liegen.

Eine weitere vorteilhafte Ausführungsform der Erfindung wird in den Merkmalen des Patentanspruchs 5 erblickt. Danach ist der Basiskörper durch eine untere U-förmige Schale und eine obere trapezförmige Schale gebildet. Auch hierbei sind die Längsränder der gegeneinander gerichteten Schenkel der Schalen miteinander schweißtechnisch verbunden. Durch die Neigung des Querstegs der oberen trapezförmigen Schale wird die Abstützung der vertikalen Schenkel nicht beeinträchtigt. Es wird jedoch der zusätzliche Vorteil erzielt, dass bei einer Krafteinleitung in das Deformationselement die Zunahme des Widerstands noch gleichmäßiger über die Länge des Deformationselements erfolgt.

Schließlich ist es nach Patentanspruch 6 denkbar, dass die dem Querträger zugewandten Stirnseiten des Basiskörpers und jeder Versteifungsschale mit einer Abdeckplatte versehen sind. Durch eine Anordnung der Abdeckplatte über den gesamten vorderen Querschnitt des Deformationselements ist eine zusätzlich verbesserte Krafteinleitung aus dem Querträger in das Deformationselement sichergestellt.

Die Erfindung ist nachfolgend anhand eines in den Zeichnungen veranschaulichten Ausführungsbeispiels näher erläutert. Es zeigen:
- Figur 1: in schematischer Perspektive ein Deformationselement für ein Kraftfahrzeug;
- Figur 2: das Deformationselement der Figur 1 in der Seitenansicht in schematischer Zuordnung zu einem Längsträger und einem Fahrschemel des Kraftfahrzeugs;
- Figur 3: in vergrößerter Darstellung eine Stimansicht auf das Deformationselement der Figur 2 in Richtung des Pfeils III;
- Figur 4: eine Darstellung entsprechend derjenigen der Figur 2 gemäß einer weiteren Ausführungsform;
- Figur 5: eine Draufsicht auf ein Deformationselement gemäß einer dritten Ausführungsform und
- Figur 6: eine Darstellung entsprechend derjenigen der Figur 3 gemäß zwei weiterer Ausführungsformen.

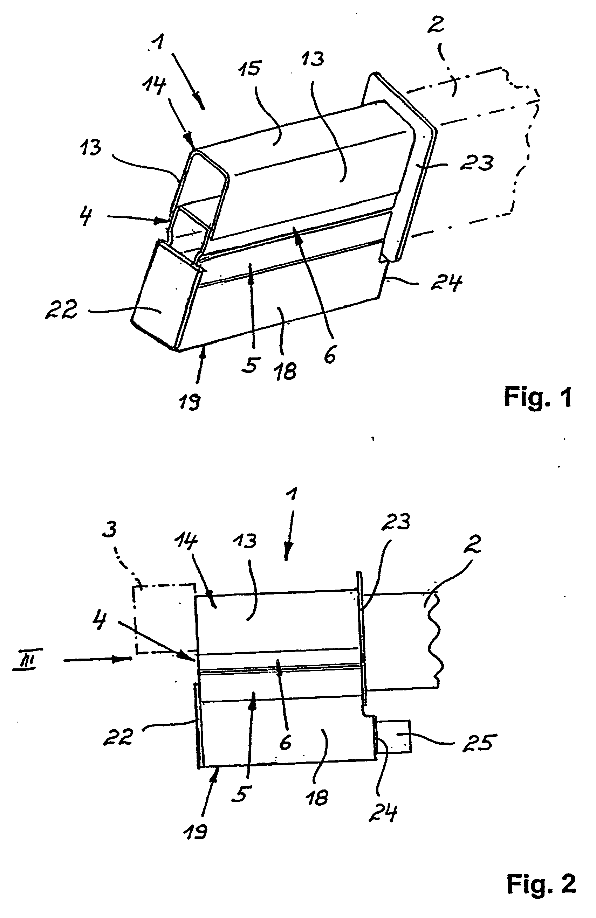

In den Figuren 1 bis 3 ist mit 1 ein Deformationselement bezeichnet, wie es bei einem Kraftfahrzeug zwischen einem Längsträger der Fahrzeugstruktur und einem Querträger angeordnet wird, um Aufprallenergie in Verformungsenergie umzuwandeln und damit innerhalb des sogenannten low-speed-Bereichs bis 16 km/h die Fahrzeugstruktur vor Schäden zu bewahren.

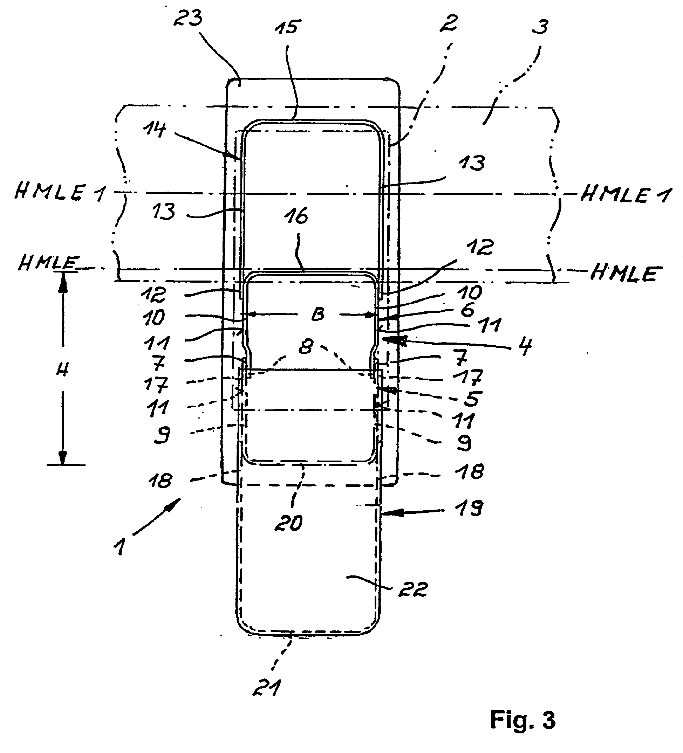

Das Deformationselement 1 wird zwischen einem solchen Längsträger 2 und einem Querträger 3 eingesetzt, deren horizontale Mittellängsebenen HMLE und HMLE1 (wie im Schema aus der Figur 3 ersichtlich) in der Vertikalen zueinander versetzt sind. Beim Ausführungsbeispiel ist die horizontale Mittellängsebene HMLE1 des Querträgers 3 höher als die horizontale Mittellängsebene HMLE des Längsträgers 2 angeordnet.

Das Deformationselement 1 umfasst einen im Querschnitt rechteckigen Basiskörper 4 mit größerer Höhe H als Breite B (Figur 3). Der Basiskörper 4 setzt sich aus einer U-förmigen Unterschale 5 und einer U-förmigen Oberschale 6 zusammen, die über die Längsränder 7, 8 ihrer einander zugewandten Schenkel 9, 10 durch Punktschweißung miteinander verbunden sind. Es ist zu erkennen, dass die Längsränder 8 der Oberschale 6 um etwa die Wanddicke der Schenkel 10 nach innen eingezogen sind, so dass die Außenseiten 11 der Schenkel 9, 10 der Unterschale 5 und der Oberschale 6 in jeweils denselben Vertikalebenen verlaufen.

Die Oberschale 6 des Basiskörpers 4 wird von den Längsrändern 12 der Schenkel 13 einer U-förmigen Versteifungsschale 14 übergriffen, die sich in Längsrichtung des Basiskörpers 4 erstreckt. Die Längsränder 12 der Schenkel 13 sind mit den Schenkeln 10 der Oberschale 6 durch Punktschweißen verbunden. Der die Schenkel 13 der Versteifungsschale 14 verbindende Steg 15 erstreckt sich parallel zu dem die Schenkel 10 der Oberschale 6 verbindenden Steg 16.

Die Unterschale 5 des Basiskörpers 4 wird ebenfalls von Längsrändern 17 der Schenkel 18 einer U-förmigen Versteifungsschale 19 übergriffen. Die Längsränder 17 sind mit den Schenkeln 9 der Unterschale 5 verschweißt. Auch der die Schenkel 9 der Unterschale 5 verbindende Steg 20 verläuft parallel zu dem die Schenkel 18 der unteren Versteifungsschale 19 verbindenden Steg 21.

Der unterhalb des Querträgers 3 liegende stimseitige Bereich des Deformationselements 1 ist weitgehend durch eine Abdeckplatte 22 verschlossen. Die Abdeckplatte 22 ist sowohl mit dem Basiskörper 4 als auch mit der unteren Versteifungsschale 19 verschweißt.

Wie ferner aus den Figuren 1 bis 3 ersichtlich ist, befindet sich auf der dem Längsträger 2 zugewandten Stirnseite des Deformationselements 1 im Höhenbereich der oberen Versteifungsschale 14, des Basiskörpers 4 und der Schenkel 18 der unteren Versteifungsschale 19 eine Platte 23, die mit diesen Teilen schweißtechnisch verbunden ist. Über die Platte 23 wird das Deformationselement 1 mit dem Längsträger 2 verbunden. Der Längsträger 2 ist in den Figuren lediglich schematisch angedeutet.

Die der Abdeckplatte 22 auf der Seite des Querträgers 3 abgewandte Stirnseite der unteren Versteifungsschate 19 ist ebenfalls durch eine Abdeckplatte 24 verschlossen. Diese ist mit der Versteifungsschale 19 verschweißt. Über die Abdeckplatte 24 stützt sich das Deformationselement 1 neben dem Längsträger 2 auch an einem nur schematisch angedeuteten Fahrschemel 25 ab.

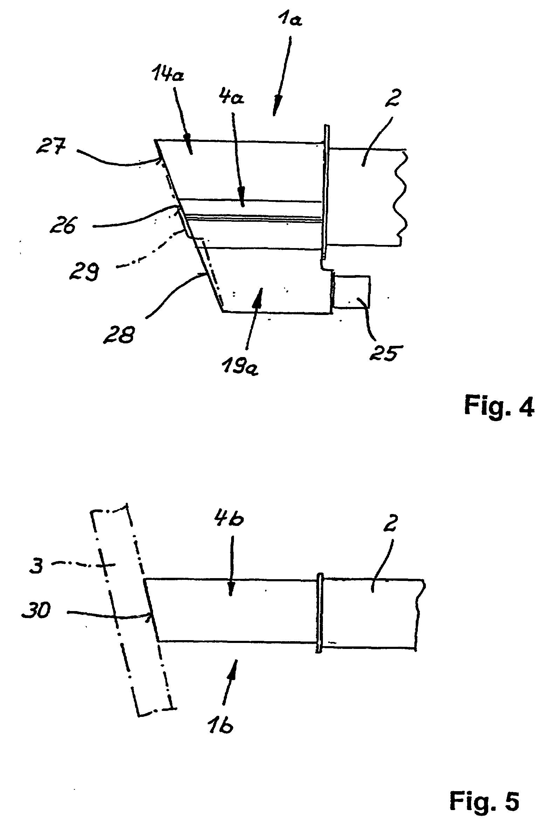

Im Unterschied zu der Ausführungsform der Figuren 1 bis 3 sind bei dem Deformationselement 1a der Figur 4 sowohl die dem Längsträger 2 abgewandte Stirnseite 26 des Basiskörpers 4a als auch die Stirnseiten 27, 28 der Versteifungsschalen 14a, 19a geneigt ausgebildet. Diese Neigung kann gleichmäßig oder, wie in strichpunktierter Linienführung 29 angedeutet, auch stufenweise ausgebildet sein.

Ansonsten entspricht die Ausführungsform der Figur 4 derjenigen der Figuren 1 bis 3, so dass von einer nochmaligen Erläuterung Abstand genommen wird.

In der Figur 5 ist in der Draufsicht ein Deformationselement 1b veranschaulicht, bei welchem die einem Querträger 3 zugewandte Stirnseite 30 des Basiskörpers 4b zur Seite hin abgeschrägt ausgebildet ist. Diese abgeschrägte Stirnseite 30 kann auch bei der Ausführungsform der Figuren 1 bis 3 oder bei der Ausführungsform der Figur 4 eingesetzt werden.

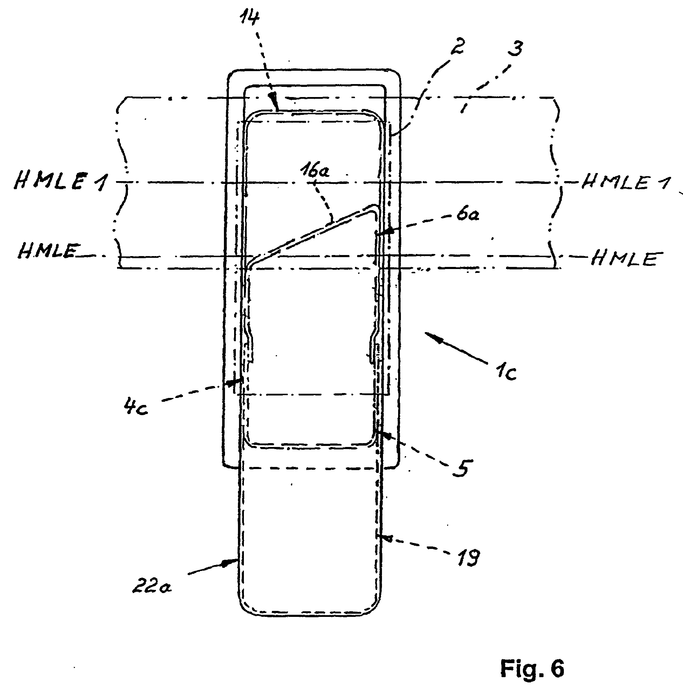

Die Figur 6 zeigt eine Darstellung entsprechend derjenigen der Figur 3, jedoch zunächst mit dem Unterschied, dass bei der oberen Schale 6a des Basiskörpers 4c der obere Steg 16a schräg ausgebildet ist.

Des Weiteren ist aus der Figur 6 erkennbar, dass hierbei die querträgerseitig des Deformationselements 1c vorgesehene Abdeckplatte 22a sich über die gesamte Höhe des Deformationselements 1c erstreckt. Diese Abdeckplatte 22a kann auch den in den Figuren 4 und 5 angedeuteten Ausführungsformen zugeordnet werden.

Ansonsten entspricht die Darstellung der Figur 6 derjenigen der Figur 3, so dass eine nochmalige Erläuterung unterbleiben kann.

## Patentansprüche

1. Deformationselement zwischen einem Längsträger (2) und einem bezüglich seiner horizontalen Mittellängsebene (HMLE1) gegenüber der horizontalen Mittellängsebene (HMLE) des Längsträgers (2) vertikal versetzten Querträger (3) eines Kraftfahrzeugs, das aus einem im Querschnitt mehreckigen, länglich hohlen Basiskörper (4, 4a, 4b, 4c) mit größerer Höhe (H) als Breite (B) und mindestens einer im Querschnitt U-förmigen Versteifungsschale (14, 19; 14a, 19a) besteht, die in Längserstreckung des Basiskörpers (4, 4a, 4b, 4c) mit den freien Längsrändern (12, 17) ihrer Schenkel (13, 18) den Basiskörper (4, 4a, 4b, 4c) übergreift und über diese Längsränder (12, 17) mit dem Basiskörper (4, 4a, 4b, 4c) schweißtechnisch verbunden ist.

2. Deformationselement nach Patentanspruch 1, bei welchem der Basiskörper (4, 4a, 4b, 4c) oben und unten von jeweils mindestens einer U-förmigen Versteifungsschale (14, 19; 14a, 19a) übergriffen ist.

3. Deformationselement nach Patentanspruch 1 oder 2, bei welchem der Basiskörper (4a, 4b) und die Versteifungsschalen (14, 19; 14a, 19a) hinsichtlich der dem Querträger (3) zugewandten Stirnseiten (26, 27, 28; 30) schräg ausgebildet sind.

4. Deformationselement nach einem der Patentansprüche 1 bis 3, bei welchem der Basiskörper (4, 4a, 4b) durch zwei U-förmige Schalen (5, 6) gebildet ist, die über die Längsränder (7, 8) ihrer gegeneinander gerichteten Schenkel (9, 10) miteinander schweißtechnisch verbunden sind.

5. Deformationselement nach einem der Patentansprüche 1 bis 3, bei welchem der Basiskörper (4c) durch eine untere U-förmige Schale (5) und eine obere trapezförmige Schale (6a) gebildet ist, die über die Längsränder (7, 8) ihrer gegeneinander gerichteten Schenkel (9, 10) miteinander schweißtechnisch verbunden sind.

6. Deformationselement nach einem der Patentansprüche 1 bis 5, bei welchem die dem Querträger (3) zugewandten Stirnseiten (26-28; 30) des Basiskörpers (4a-c) und/oder jeder Versteifungsschale (14, 19; 14a, 19a) mit einer Abdeckplatte (22, 22a) versehen sind.

## Claims

1. Deformable element between a longitudinal member (2) and a cross member (3) of a motor vehicle that is vertically offset with respect to its horizontal centre longitudinal plane (HMLE1) in relation to the horizontal centre longitudinal plane (HMLE) of the longitudinal member (2), which element comprises a cross-sectionally polygonal, elongate-hollow basic body (4, 4a, 4b, 4c) of greater height (H) than width (B) and at least one cross-sectionally U-shaped reinforcing shell (14, 19; 14a, 19a), which in the longitudinal extent of the basic body (4, 4a, 4b, 4c) reaches with the free longitudinal edges (12, 17) of its limbs (13, 18) over the basic body (4, 4a, 4b, 4c) and by means of these longitudinal edges (12, 17) is connected by welding to the basic body (4, 4a, 4b, 4c).

2. Deformable element according to Patent Claim 1, in which the basic body (4, 4a, 4b, 4c) is reached over at the top and bottom by in each case at least one U-shaped reinforcing shell (14, 19; 14a, 19a).

3. Deformable element according to Patent Claim 1 or 2, in which the basic body (4a, 4b) and the reinforcing shells (14, 19; 14a, 19a) are formed obliquely with regard to the end faces (26, 27, 28; 30) facing the cross member (3).

4. Deformable element according to one of Patent Claims 1 to 3, in which the basic body (4, 4a, 4b) is formed by two U-shaped shells (5, 6), which are connected to each other by welding by means of the longitudinal edges (7, 8) of their legs (9, 10) that are directed towards each other.

5. Deformable element according to one of Patent Claims 1 to 3, in which the basic body (4c) is formed by a lower U-shaped shell (5) and an upper trapezoidal shell (6a), which are connected to each other by welding by means of the longitudinal edges (7, 8) of their legs (9, 10) that are directed towards each other.

6. Deformable element according to one of Patent Claims 1 to 5, in which the end faces (26-28; 30) of the basic body (4a-c) and/or of each reinforcing shell (14, 19; 14a, 19a) that are facing the cross member (3) are provided with a covering plate (22, 22a).

## Revendications

1. Elément de déformation entre un longeron (2) et une traverse (3) d'un véhicule automobile, la traverse (3) étant décalée verticalement par rapport à un plan longitudinal central horizontal (HMLE1) opposé au plan longitudinal central horizontal (HMLE) du longeron (2), l'élément de déformation consistant en un corps de base creux longitudinalement, polygonal en section transversale avec une hauteur supérieure (H) à la largeur (B) et au moins une coquille de renfort (14,19 ;14a,19a) en forme de U en section transversale qui, dans l'extension longitudinale du corps de base (4,4a,4b,4c) par les bords longitudinaux libres (12,17) de ses ailes (13,18), emprisonne le corps de base (4,4a,4b,4c) par le dessus et est raccordée au corps de base (4,4a,4b,4c) par une technique de soudage.

2. Elément de déformation selon la revendication 1, dans lequel le corps de base (4,4a,4b,4c) est emprisonné par le dessus dans la partie supérieure et dans la partie inférieure respectivement, par au moins une coquille de renfort en forme de U (14,19 ;14a,19a).

3. Elément de déformation selon la revendication 1 ou 2, dans lequel le corps de base (4a,4b) et les coquilles de renfort (14,19 ;14a,19a) sont configurés obliquement par rapport aux côtés frontaux (26,27,28 ;30) tournés vers la traverse (3).

4. Elément de déformation selon l'une des revendications 1 à 3, dans lequel le corps de base (4,4a,4b) est constitué par deux coquilles en forme de U (5,6) qui sont raccordées entre elles par une technique de soudage par les bords longitudinaux (7,8) de leurs ailes (9,10) en regard l'une de l'autre.

5. Elément de déformation selon l'une des revendications 1 à 3, dans lequel le corps de base (4c) est constitué par une coquille inférieure en forme de U (5) et une coquille supérieure en forme de trapèze (6a) qui sont raccordées entre elles par une technique de soudage par les bords longitudinaux (7,8) de leurs ailes en regard l'une de l'autre (9,10).

6. Elément de déformation selon l'une des revendications 1 à 5, dans lequel les côtés frontaux (26-28 ;30) tournés vers la traverse (3) du corps de base (4a-c) et/ou chaque coquille de renfort (14,19 ;14a,19a) sont munis d'une plaque de recouvrement (22,22a).
